# EUROPEAN PATENT APPLICATION

(11) **EP 3 238 981 A1**
(43) Date of publication of application: **01.11.2017**
(21) Application number: 16382185.3
(22) Date of filing: 27.04.2016
(51) Int. Cl.: B60N 2/36, E05B 77/38, E05B 85/26, E05B 85/24

(54) **LOCKING MECHANISM FOR A BACKREST OF A VEHICLE**

(71) Applicant: GRUPO ANTOLIN-INGENIERIA, S.A., 09007 Burgos (ES)
(72) Inventor: CRISTÓBAL ARAGÓN, Andrés, 09007 Burgos (ES); FRESNEDA GONZÁLEZ, Miguel Ángel, 09007 Burgos (ES); GARCÍA GARCÍA, Rafael, 09007 Burgos (ES)
(74) Representative: Balder IP Law, S.L.

(57) **Abstract**

The locking mechanism comprises a rotary latch (1) engageable over a locking striker (2) fixed to the vehicle and a detent pawl (3) comprising a first contact surface for contacting against the rotary latch, when the rotary latch (1) rotates with a first pivoting movement, to establish a first locking position wherein the rotary latch (1) is in engagement over the locking striker (2). The detent pawl (3) comprises a second contact surface (7) for contacting against the rotary latch (1), when the rotary latch (1) rotates with an additional pivoting movement further form the first locking position, to establish a second locking position wherein the detent pawl (3) pushes the rotary latch (1) against the striker (2).

## Description

### TECHNICAL FIELD

The invention is related to locking mechanisms for vehicle seats, especially for locking the backrest of a rear seat to a vehicle structure.

### STATE OF THE ART

Locking mechanisms for locking vehicle seats are known in the art which comprise a rotary latch for engaging over a striker fixed to the vehicle structure and a detent pawl for locking the movement of the rotary latch establishing a locking position for the seat. The rotary latch and the detent pawl are coupled by a spring such that the spring pushes the rotary latch to the locking position. Due to manufacturing/assembly tolerances, in the locking position there can be a gap between the rotary latch and the locking striker that produces noises (squeak and rattle). This gap can also be produced due to different sizes of the striker. To solve this problem, the locking mechanisms usually comprise a noise preventing device such as springs, metal bands, rubber parts, wedges or pivoting parts for pushing the striker against the mechanism.

Locking mechanisms are disclosed for example in DE-3825594-A1, DE-3743558-A1, EP-1619329-A1, DE-102006030732-A1, DE-102004021516-A1 and DE-10058044-A1.

The problem is that all these mechanisms require the use of additional parts (springs, metal bands, rubber parts, wedges or pivoting parts) which make the mechanism more complex. That also means that the weight of the mechanism increases and also the space required for its mounting in the backseat of the vehicle.

### DESCRIPTION OF THE INVENTION

The invention relates to a locking mechanism for a backrest of a vehicle seat (mountable on the backrest of the seat) comprising:
a rotary latch engageable over a locking striker fixed to the vehicle;
a detent pawl comprising a first contact surface or locking surface for contacting against the rotary latch when the rotary latch rotates with a first pivoting movement, to establish a first locking position wherein the rotary latch is in engagement over the locking striker. The first locking position is a position in which the rotary latch is engaged over the striker and blocked by the detent pawl such that the rotary latch cannot return back to an unlock position unless the user pushes an unblocking button. In this position, due to manufacturing/assembly tolerances, a distance or gap can be established between the rotary latch and the striker. In the locking position the backrest is placed substantially vertical and the locking mechanism is engaged over the striker such that the backrest cannot be folded onwards.

According to the invention the detent pawl comprises a second contact surface for contacting against the rotary latch, when the rotary latch rotates with an additional pivoting movement further form the first locking position, to establish a second locking position wherein the detent pawl pushes the rotary latch to contact against the striker, preventing any relative movement between the locking mechanism and the striker. In that second locking position the rotary latch is pressed against the striker to keep permanent contact such that no noises are generated.

In preferred embodiments of the invention the first contact surface is a radial surface of the detent pawl (all the points of the first contact surface are at the same radial distance from the pivoting axis of the detent pawl) whilst the second contact surface comprises a cam profile at a radial distance from the pivoting axis greater that the radial distance of the first contact surface and preferably the radial distance increases gradually in the pivoting direction. Thus the detent pawl pushes against the striker in a different point of its cam profile depending on the relative position of the striker and rotary latch. The amplitude of the additional pivoting movement will depend on the relative position of the striker and rotary latch, i.e. the more distance gap between the rotary latch and the striker the greater the amplitude of the additional pivoting movement is. Thus the mechanism adapts automatically to every different position or different diameter of the striker due to manufacturing/assembly tolerances.

The invention also relates to a seat of a vehicle with a locking mechanism as previously described.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a top view of the mechanism in an unlocked position.
Figure 2 is a top view of the mechanism in a first locking position.
Figure 3 is a top view of the mechanism in a second locking position.
Figure 4 is a perspective of a detent pawl of the mechanism.

### DESCRIPTION OF A WAY OF CARRYING OUT THE INVENTION

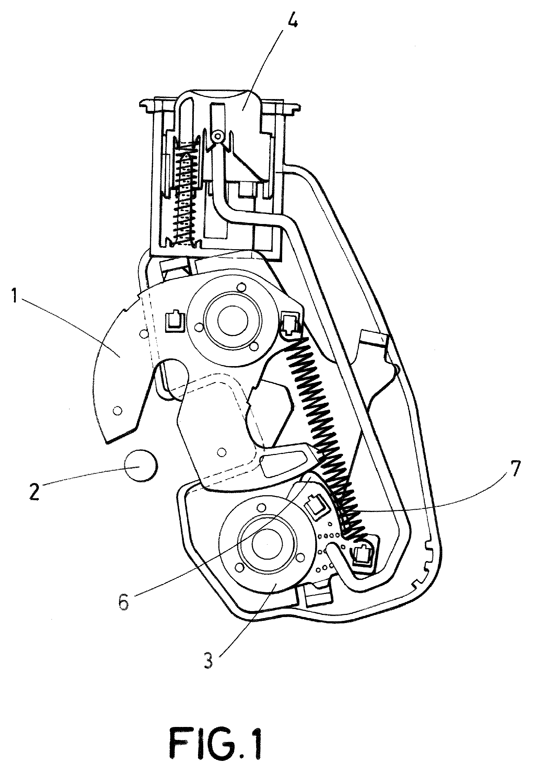

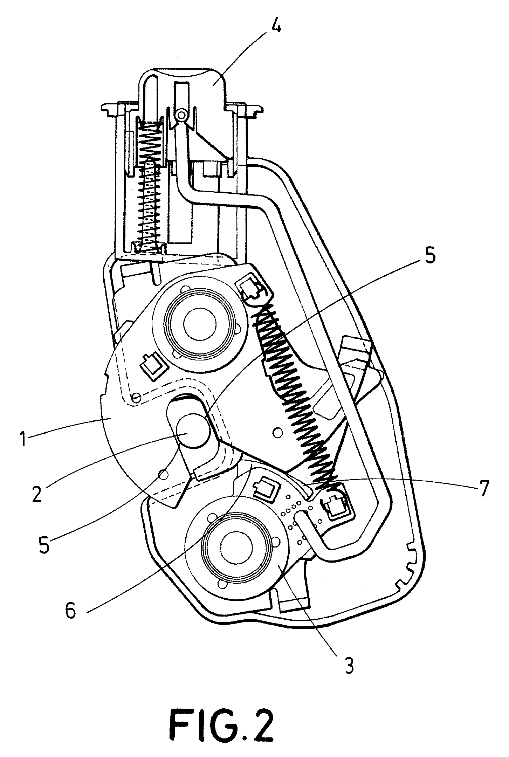

Figure 1 illustrates the locking mechanism of the invention in an unlocked position. The mechanism comprises a rotary latch 1 and a detent pawl 3 coupled by a spring which pushes the rotary latch 1 and detent pawl 3 to a first locking position illustrated in figure 2.

A locking striker 2 attachable to the vehicle structure is also represented although the vehicle structure is nor illustrated.

Figure 2 illustrates the locking mechanism in a first locking position, wherein the rotary latch 1 is engaged over the locking striker 2 and the detent pawl 3 is locking the rotary latch 1 in the first locking position. The first locking position is a position in which the rotary latch 1 is engaged over the striker 2 and cannot return back to an unlock position as of figure 1 unless the user pushes an unblocking button 4. In this position the backrest is placed substantially vertical and cannot be folded onwards.

As explain previously, due to manufacturing/assembly tolerances, there can be a gap 5 between the rotary latch 1 and the locking striker 2 which produces noises. This gap 5 can be seen in figure 2.

The detent pawl 3 comprises a first contact surface 6 for contacting against the rotary latch 1 to establish the first locking position, when the detent pawl 3 rotates from the unlocked position of figure 1 with a first pivoting movement due to the pushing force of the spring 4.

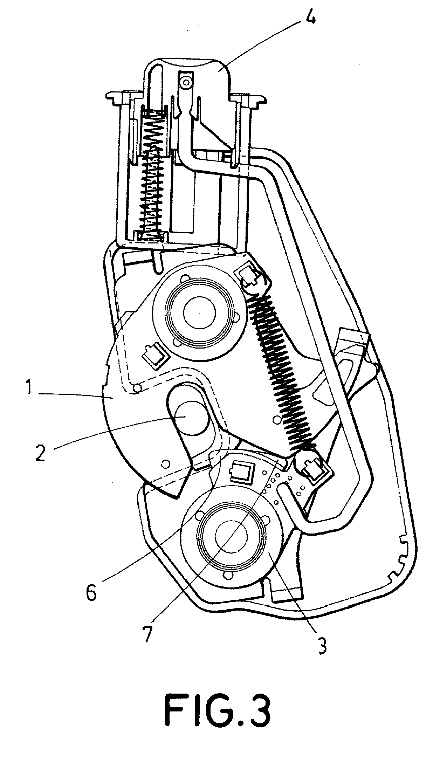

Figure 3 illustrates the locking mechanism in a second locking position wherein the rotary latch 1 rotates further from the first locking position to a second locking position in which the rotary latch 1 is pushed against the striker 2. The detent pawl 3 comprises a second contact surface 7 for contacting against the rotary latch 1 to establish the second locking position, when the rotary latch 1 rotates with an additional pivoting movement after the first locking position.

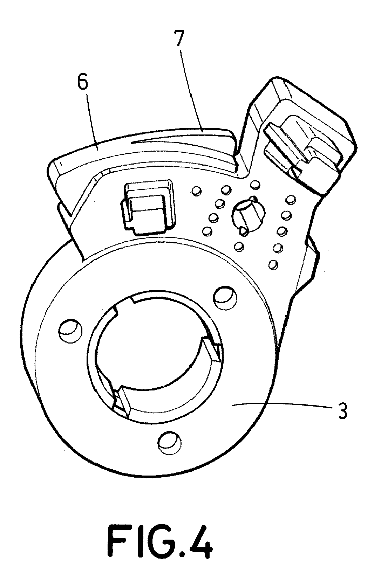

In a preferred embodiment, the second contact surface 7 is a cam as illustrated in figure 4. As can be seen in this figure the distance of the points of the cam to the pivoting axis of the detent pawl 3 increases in the pivoting direction such that the more the pivoting of the detent pawl 3 the greater the amplitude of the movement of rotary latch 1 is, pressing against the striker 2. Thus, the detent pawl 3 pushes the striker 2 against the rotary latch 1 regardless the mounting/assembly tolerances between striker 2 and mechanism.

For smaller diameters of the striker 2, the pivoting of the detent pawl 3 is larger such that the rotary pawl 1 moves further and contacts against the striker 2. For greater diameters of the striker 2 the pivoting of the detent pawl 3 is small because the rotary pawl 1 needs a smaller movement to contact against the striker 2.

In this text, the term "comprises" and its derivations (such as "comprising", etc.) should not be understood in an excluding sense, that is, these terms should not be interpreted as excluding the possibility that what is described and defined may include further elements, steps, etc.

Unless otherwise indicated, any ranges referred to in this document include the indicated end points.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A locking mechanism for a backrest of a vehicle comprising
a rotary latch (1) engageable over a locking striker (2) fixed to the vehicle;
a detent pawl (3) comprising a first contact surface (6) for contacting against the rotary latch (1), when the rotary latch (1) rotates with a first pivoting movement, to establish a first locking position wherein the rotary latch (1) is in engagement over the locking striker (2), **characterized in that** the detent pawl (3) comprises a second contact surface (7) for contacting against the rotary latch (1), when the rotary latch (1) rotates with an additional pivoting movement further from the first locking position, to establish a second locking position wherein the detent pawl (3) pushes the rotary latch (1) to contact against the striker (2), preventing any relative movement between the locking mechanism and the striker (2).

2. Locking mechanism as in claim 1 wherein the second contact surface (7) comprises a cam profile.

3. Seat of a vehicle comprising a locking mechanism as in previous claims.
